# EUROPÄISCHE PATENTANMELDUNG

(11) **EP 0 882 918 A2**
(43) Veröffentlichungstag der Anmeldung: **09.12.1998**
(21) Anmeldenummer: 98108399.1
(22) Anmeldetag: 08.05.1998
(51) Int. Cl.: F16K 17/38

(54) **Thermisch betätigbares Sicherheitsventil**

(30) Priorität: 07.06.1997 DE 29709965 U
(71) Anmelder: Metallwerke Otto Dingerkus GmbH, 57439 Attendorn (DE)
(72) Erfinder: Hartung, Karl-Heinz, 57439 Attendorn (DE)
(74) Vertreter: Stenger, Watzke & Ring Patentanwälte

(57) **Zusammenfassung**

Um ein thermisch betätigbares Sicherheitsventil zum Absperren von Rohrleitungen fluider Medien, beispielsweise brennbarer Gase, mit einem Absperrkörper, mittels dem ein in der Rohrleitung ausgebildeter Ventilsitz verschließbar ist, einem in der Rohrleitung festlegbaren Stützelement sowie einer den Absperrkörper bei einer vorbestimmbaren Temperatur selbsttätig freigebenden Sperre, durch die in der Offenstellung des Sicherheitsventils der Absperrkörper in einem bezüglich seiner Schließbewegung gespannten Zustand an dem Stützelement gehalten ist, dahingehend zu verbessern, daß bei kostengünstiger Herstellung eine erheblich einfachere und schnellere Montage möglich ist, wird vorgeschlagen, daß die Sperre zumindest ein temperatursensitives Halteement umfaßt, das aufgrund seines unterhalb der vorbestimmbaren Temperatur vorhandenen Verformungswiderstandes den Absperrkörper und das Stützelement lösbar miteinander verbindet und an einem dieser beiden befestigbar ist.

## Beschreibung

Die Erfindung betrifft ein thermisch betätigbares Sicherheitsventil zum Absperren von Rohrleitungen fluider Medien, beispielsweise brennbarer Gase, mit einem Absperrkörper, mittels dem ein in der Rohrleitung ausgebildeter Ventilsitz verschließbar ist, einem in der Rohrleitung festlegbaren Stützelement sowie einer den Absperrkörper bei einer vorbestimmbaren Temperatur selbsttätig freigebenden Sperre, durch die in der Offenstellung des Sicherheitsventils der Absperrkörper in einem bezüglich seiner Schließbewegung gespannten Zustand an dem Stützelement gehalten ist.

Sicherheitsventile zum Absperren von Rohrleitungen sind in den unterschiedlichsten Ausführungen bekannt und werden vor allem dann eingesetzt, wenn infolge überhöhter Temperaturen Gefahren und Schäden auftreten können, wie dies beispielsweise bei leicht entzündbaren Gasen, die zusammen mit der Luft ein explosives Gemisch bilden, der Fall ist.

Im Stand der Technik sind Lösungen für Sicherheitsventile bekannt, die eine thermische Auslösung eines Schließvorganges in Abhängigkeit einer vorbestimmten Temperatur bewirken. Zu diesem Zweck finden Dehnstoffpatronen, Bimetallstreifen oder temperaturempfindliche Lotlegierungen, die ab einer bestimmen Temperatur ihre Bindekraft verlieren, Verwendung, um einen federbelasteten Absperrkörper bei zu hoher thermischer Belastung freizugeben, so daß dieser dann schlagartig gegen einen Ventilsitz gepreßt wird und auf diese Weise den Durchgang für das betreffende Medium versperrt. Außer durch die Art der thermischen Auslösung unterscheiden sich die bekannten Sicherheitsventile durch die konstruktive Ausgestaltung des Absperrkörpers, der bei-spielsweise als Kugel, Kegel, Kegelstumpf oder auch als Rotationshyperboloid ausgebildet sein kann. Ein weiteres Unterscheidungsmerkmal ist die Anordnung des Absperrkörpers in oder entgegen der Strömungsrichtung sowie die Kürze der Schließzeit bzw. des Schließweges.

Als Nachteil der bekannten Sicherheitsventile erweist sich, daß sie die an sie gestellten Anforderungen mit nur befriedigender Güte oder fertigungs- und kostenintensivem Aufwand erfüllen. So sind technische Lösungen bekannt, bei denen der Absperrkörper orthogonal zur Strömungsrichtung des Mediums geführt wird, was je nach konstruktiver Ausgestaltung zu Strömungsverlusten, relativ langen Schließzeiten oder hohen Fertigungskosten führt.

Als nächstliegender Stand der Technik ist aus der DE 295 11 991 U1 ein Sicherheitsventil zum Absperren von Leitungen für temperaturempfindliche Medien bekannt, das einen durch eine Feder belasteten, linear in einer Rohrleitung geführten Absperrkörper aufweist, der in der Schließstellung einen konisch ausgebildeten Ventilsitz verschließt, dessen Achse mit der Achse der Rohrleitung gleichgerichtet ist. Der Absperrkörper weist einen Kopf und einen Führungsstift auf, der in einer zentrischen Bohrung eines Stützelementes mittels einer Lotlegierung entgegen der Federwirkung gehalten wird. Das Stützelement liegt sowohl in der Offen- als auch in der Schließstellung des Sicherheitsventils in der Rohrleitung fest und weist Haltebeine auf, deren sternförmige Anordnung relativ günstige Strömungsverhältnisse für das Medium ergeben. Nachteilig bei diesem Sicherheitsventil ist, daß die Befestigung des Absperrkörpers an dem Stützelement mit Hilfe einer Lotlegierung erfolgt, die aufgrund ihres stoffschlüssigen Verbindungscharakters eine relativ aufwendige Montage mit sich bringt.

Der Erfindung liegt die **Aufgabe** zugrunde, ein Sicherheitsventil der eingangs genannten Art dahingehend weiterzubilden, daß bei kostengünstiger Herstellung eine erheblich einfachere und schnellere Montage gegeben ist.

Die **Lösung** dieser Aufgabe ist erfindungsgemäß dadurch gekennzeichnet, daß die Sperre zumindest ein temperatursensitives Halteelement umfaßt, das aufgrund seines unterhalb der vorbestimmbaren Temperatur vorhandenen Verformungswiderstandes den Absperrkörper und das Stützelement lösbar miteinander verbindet und an einem dieser beiden befestigbar ist.

Durch eine solche erfindungsgemäße Ausgestaltung ist eine einfache und schnelle Montage des Sicherheitsventils gegeben, da das Halteelement ausschließlich an einem Bauteil, nämlich dem Absperrkörper oder dem Stützelement, befestigt werden muß und im Anschluß daran, je nach konstruktiver Ausgestaltung, die beiden Bauteile kraftschlüssig, formschlüssig oder auch stoffschlüssig miteinander verbindet. Ursächlich hierfür ist, daß das Halteelement unterhalb einer vorbestimmbaren Temperaturgrenze einen gewissen Verformungswiderstand aufweist, der eine Relativbewegung zwischen Absperrkörper und Stützelement in axialer Richtung verhindert. Wird die vorbestimmbare Temperaturgrenze erreicht, so reduziert sich aufgrund der temperatursensitiven Eigenschaft des Halteelements der Verformungswiderstand und der Absperrkörper wird infolge seines gespannten Zustands freigegeben. Die erfindungsgemäße Lösung umfaßt dabei sowohl technische Realisierungen, die eine separate Sperre respektive Halteelement vorsehen, als auch solche, bei denen die Sperre respektive Halteelement direkt an dem Stützelement oder dem Absperrkörper ausgebildet sind.

In einer bevorzugten Ausführungsform der Erfindung ist das Halteelement in Art eines Clips ausgebildet. Dies bietet den Vorteil, daß der Absperrkörper und das Stützelement durch einfaches Aufstecken miteinander montierbar sind. Von besonderem Vorteil ist es, wenn das Halteelement mit wenigstens einem Vorsprung versehen ist, der in eine korrespondierend ausgebildete Aussparung an dem Absperrkörper oder an dem Stützelement eingreift, so daß sich auf einfachste Art und Weise eine formschlüssig Verbindung von Absperrkörper und Stützelement erreichen läßt.

Gemäß einem weiteren Merkmal der Erfindung ist das Halteelement im wesentlichen hohlzylindrisch ausgebildet und wenigstens an einem Ende mit einem den Vorsprung bildenden Absatz versehen, um ein schnelles und sicheres Einrasten des Halteelements in einem entsprechend zylindrisch ausgestalteten Abschnitt an dem Absperrkörper oder dem Stützelement zu gewährleisten.

Vorteilhafterweise umfaßt der Absperrkörper einen Kopf- und einen Führungsabschnitt, wobei der Führungsabschnitt eine Bohrung des Stützelementes durchragend angeordnet ist, so daß eine sichere Führung des Absperrkörpers während seiner Schließbewegung gewährleistet ist. Um eine besonders einfache Montage zu ermöglichen, wird weiterhin vorgeschlagen, daß zumindest der Bereich des Führungsabschnitts, der das Stützelement durchragt, annähernd zapfenartig ausgebildet ist und eine umlaufende Nut für den Vorsprung des Halteelementes aufweist. Auf diese Weise ist es möglich, das hohlzylindrische Halteelement so aufzurasten, daß sich eine Stirnseite des Halteelementes gegen die dem Absperrkörper abgewandten Seite des Stützelementes abstützt und damit den Absperrkörper am Stützelement festhält.

Zweckmäßigerweise ist die an dem Stützelement anliegende Stirnseite des Halteelementes mit einer Fase versehen, die gegen eine korrespondierende Fase der Bohrung des Stützelementes anpreßbar ist, so daß ein sicherer Halt des Absperrkörpers in der Offenstellung des Sicherheitsventils sichergestellt ist. Von besonderem Vorteil ist es auch, wenn das Halteelement von einer Stützhülse umschlossen ist, die ein sicheres Eingreifen des Vorsprungs des Halteelements in der Nut des Führungsabschnitts des Absperrkörpers gewährleistet.

In einer weiteren Ausführungsform der Erfindung ist das Halteelement über ein Schraubengewinde an dem Absperrkörper befestigbar, um eine einfache und schnelle Montage zu erzielen.

Gemäß einer alternativen Ausführungsform der Erfindung ist das Halteelement im wesentlichen stiftförmig ausgebildet, so daß es möglich ist, den Absperrkörper in Art einer Bolzensicherung gegenüber dem Stützelement zu halten.

Gemäß einer weiteren vorteilhaften Ausgestaltung der Erfindung ist das Halteelement aus einem temperaturabhängigen Dehnmaterial gefertigt, so daß sich aufgrund der Ausdehnung des Halteelementes bei einer vorbestimmten Temperatur ein Lösen der Verbindung zwischen Absperrkörper und Stützelement erreichen läßt, was die Freigabe des Absperrkörpers zur Folge hat. Als Dehnmaterial eignen sich metallische, nichtmetallische oder auch Memory-Werkstoffe, die je nach realisierter Ausführungsform einen entsprechend positiven oder auch negativen Ausdehnungskoeffizienten aufweisen.

Zweckmäßigerweise ist die vorbestimmbare Temperatur durch unterschiedliche Werkstoffwahl für das Halteelement variierbar, um eine universelle Einsetzbarkeit für verschiedenartige Medien sicherzustellen.

Gemäß einem weiteren Merkmal der Erfindung ist der Absperrkörper in Richtung der Rohrleitung geführt, so daß sich ein kurzer Schließweg realisieren läßt.

Um eine geringstmögliche Bauteilanzahl und ein einfache und schnelle Montage zu erzielen, wird weiterhin vorgeschlagen, daß der aus Kopf- und Führungsabschnitt bestehende Absperrkörper einstückig ausgebildet ist.

Gemäß einer vorteilhaften Ausgestaltung der Erfindung weist der Kopfabschnitt eine ringförmige Vertiefung zur Aufnahme eines Federelementes auf, um auf einfachste Art und Weise ein Federelement zwischen Absperrkörper und Stützelement zu positionieren, welches den Absperrkörper in einem gespannten Zustand während der Offenstellung des Sicherheitventils hält.

In vorteilhafter Weise umfaßt das Stützelement Haltebeine, die in einer Nut an der Innenwandung der Rohrleitungen verstemmbar sind, um eine einfache Montierbarkeit und Demontierbarkeit zu gewährleisten.

Weitere Einzelheiten, Merkmale und Vorteile des Gegenstandes der Erfindung werden nachfolgend anhand von in der Zeichnung dargestellten, bevorzugten Ausführungsbeispielen näher erläutert. Darin zeigen:
- Fig. 1: ein Sicherheitsventil mit einem hohlzylindrisch ausgebildeten Halteelement in einer Schnittdarstellung;
- Fig. 2: das Sicherheitsventil mit einer alternativen Ausführungsform des Halteelementes gemäß Fig. 1 in einer Schnittdarstellung;
- Fig. 3: das Sicherheitsventil mit einem stiftförmig ausgebildeten Halteelement in einer Schnittdarstellung;
- Fig. 4: das Sicherheitsventil mit einem als Gewindebuchse ausgebildeten Halteelement in einer Schnittdarstellung;
- Fig. 5: das Sicherheitsventil mit einem als Gewindebolzen ausgebildeten Halteelement in einer Schnittdarstellung;
- Fig. 6: das Sicherheitsventil mit einem klammerförmig ausgebildeten Halteelement in einer Schnittdarstellung und
- Fig. 7: das Sicherheitsventil mit einem gleichzeitig als Halteelement fungierenden Stützelement.

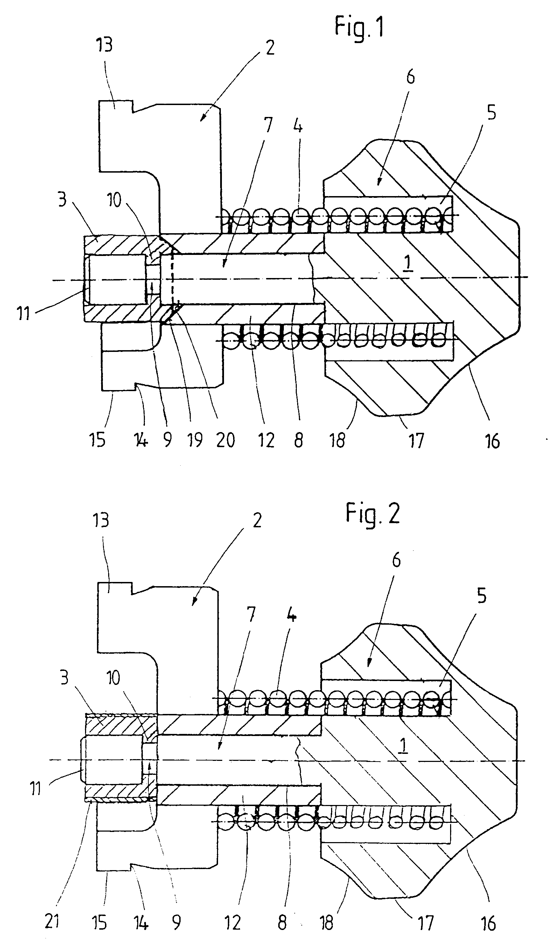

Das in Fig. 1 dargestellte Sicherheitsventil umfaßt einen Absperrkörper 1, ein Stützelement 2 sowie ein hohlzylindrisch ausgebildetes Halteelement 3, das den Absperrkörper 1 gegen die durch ein Federelement 4 hervorgerufene Kraft an dem Stützelement 2 festhält. Das als Spiralfeder ausgebildete Federelement 4 stützt sich zu diesem Zweck einerseits auf der dem Absperrkörper 1 zugewandten Seite des Stützelementes 2 und andererseits in eine ringförmige Vertiefung 5 im Absperrkörper 1 ab.

Der Absperrkörper 1 weist einen Kopfabschnitt 6 und einen in Richtung des Stützelementes 2 sich einstückig anschließenden, zylindrischen Führungsabschnitt 7 auf, der das Stützelement 2 in einer Bohrung 8 durchragt und am Austritt der Bohrung 8 mit einer umlaufenden Nut 9 versehen ist. In diese Nut 9 rastet ein an der Stirnseite des hohlzylindrisch ausgebildeten Halteelementes 3 nach innen gerichteter Absatz 10 ein. Der Innendurchmesser des Halteelementes 3 ist so bemessen, daß er in etwa dem Außendurchmesser des im wesentlichen zapfenförmigen Bereiches 11 des das Stützelement 2 durchragenden Führungsabschnitts 7 entspricht, während der Außendurchmesser größer ist als der Durchmesser der Bohrung 8 des Stützelementes 2.

Das Stützelement 2 umfaßt einen die Bohrung 8 aufweisenden zentralen Bereich 12, an dem sternförmig Haltebeine 13 angeordnet sind. Die Haltebeine 13 sind in einem Winkel von 120° zueinander versetzt und weisen am Ende eines orthogonal abgewinkelten Bereiches im Anschluß an eine Einkerbung 14 einen Vorsprung 15 auf, mittels dem sie in einer Nut an der Innenwandung einer Rohrleitung verstemmbar sind. Die Befestigung der Haltebeine 13 in der Rohrleitung kann alternativ auch über eine Schraub- oder Schweißverbindung erfolgen.

Der Kopfabschnitt 6 des Absperrkörpers 1 läßt sich in an sich bekannter Weise in drei geometrisch unterschiedliche Bereiche 16 bis 18 gliedern, die eine strömungsmechanisch günstige Ausbildung darstellen. So weist der mittlere Bereich 17 des Kopfabschnittes 6 die Form eines Kegelsegmentes auf, während sowohl der im Einbauzustand des Sicherheitsventiles einem Ventilsitz abgewandte Bereich 18 als auch der diesem zugewandte Bereich 16 die Form eines einschaligen Rotationshyperboloids besitzen. In der Schließstellung des Sicherheitsventiles drückt sich der mittlere Bereich 17 des Absperrkörpers 1 gegen den Ventilsitz und bildet damit eine Dichtfläche, bei der auf zusätzliche Dichtelemente verzichtet werden kann. Aufgrund der besonderen Ausbildung der geometrischen Form des Kopfabschnittes 6 des Absperrkörpers 1 eignet sich das Sicherheitsventil infolge dieser stromlinienförmigen Ausgestaltung für einen Einbau in und entgegen der Strömungsrichtung eines Mediums. Die strömungstechnischen Eigenschaften des Sicherheitsventils können zudem gesteigert werden, indem die Rohrleitung des Mediums im Bereich des Absperrkörpers 1 mit einer bauchigen, der geometrischen Form des Absperrkörpers 1 angepaßten Querschnittserweiterung versehen ist. Dabei sind unter einer Rohrleitung alle mehr oder weniger rohrartigen Leitungen zu verstehen, die nicht für andere Zwecke als die des Förderns von Flüssigkeiten, Gasen oder sonstigen Stoffen ausgebildet sind.

Wie Fig. 1 weiterhin zu entnehmen ist, ist das stirnseitige, dem Stützelement 2 zugewandte Ende des Halteelementes 3 mit einer Fase 19 versehen, die aufgrund der Wirkung des Federelementes 4 an die korrespondierend ausgebildete Fase 20 der Bohrung 8 angepreßt ist. Auf diese Weise kann ein unbeabsichtigtes Lösen des Halteelementes 3 von dem Führungsabschnitt 7 des Absperrkörpers 1 ausgeschlossen werden, da die konischen Fasungsflächen ein Aufspreizen des Halteelementes 3 verhindern. In der in Fig. 2 gezeigten Ausführungsform des Halteelementes 3 ist statt einer Anfasung ein Stützelement 21 vorgesehen, das ebenfalls bewirkt, daß der Absatz 10 des Halteelementes 3 sich nicht unbeabsichtigt aus der umlaufenden Nut 9 des Absperrkörpers 1 lösen kann.

Das Halteelemente 3 ist sowohl in der Ausführungsform nach Fig. 1 als auch in der nach Fig. 2 aus einem temperaturabhängigen Dehnmaterial gefertigt, das bei Arbeitstemperatur des Sicherheitsventiles gerade so viel elastischen Verformungswiderstand aufweist, daß sich das Halteelement 3 auf das zapfenförmige Ende 11 des Absperrkörpers 1 aufrasten läßt und damit den Absperrkörper 1 in bezug auf das Stützelement 2 fixiert. Wird beispielsweise im Falle eines Brandes eine unzulässig hohe Temperatur erreicht, so dehnt sich das Halteelement 3 so weit auf, daß die durch das Einrasten des Absatzes 10 in der umlaufenden Nut 9 bewirkte Kraft nicht ausreicht, die durch das Federelement 4 hervorgerufene Kraft zu kompensieren, so daß der Absperrkörper 1 schlagartig freigegeben wird und gegen den in der Rohrleitung ausgebildeten Ventilsitz schlägt und damit den Durchgang für das Medium versperrt. Das Ausdehnen des Halteelementes 3 kann dabei von einem Abschervorgang infolge einer durch die Temperatureinwirkung erhöhten Scherbeanspruchung des Halteelementes 3 begleitet werden.

Die Wahl des Dehnmaterials für das Halteelement 3 richtet sich dabei nach der Temperatur, bei welcher der Schließvorgang des Sicherheitsventils ausgelöst werden soll, so daß sich eine flexible Einsetzbarkeit des Sicherheitsventils für verschiedenartige Medien ergibt. Zu diesem Zweck können an sich bekannte metallische, nichtmetallische oder auch Memory-Werkstoffe, wie beispielsweise Nickel-Titan-Legierungen oder Kupfer-Zink-Aluminium-Legierungen, verwendet werden.

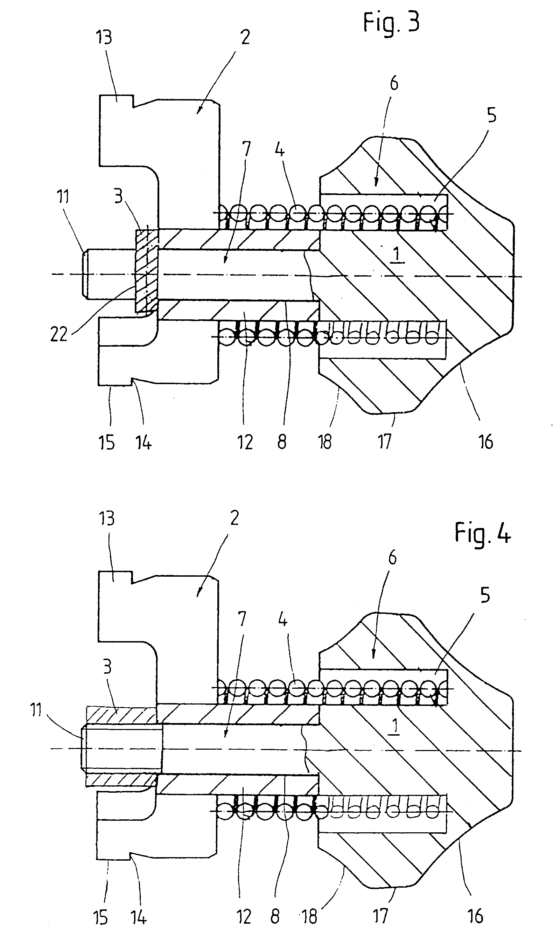

Bei der in Fig. 3 gezeigten Ausführungsform ist das Halteelement 3 stiftförmig ausgebildet. Das das Stützelement 2 durchragende Ende 11 des Absperrkörpers 1 ist beim Austritt aus der Bohrung 8 mit einer Durchgangsbohrung 22 versehen, in der das stiftförmige Halteelement 3 geführt ist. Die Länge des Halteelementes 3 ist größer als der Durchmesser der Bohrung 8, so daß der Absperrkörper 1 in Art einer Bolzensicherung an dem Stützelement 2 fixiert wird. Die Festigkeit des Halteelementes 3 ist so bemessen, daß sie gerade die durch das Federelement 4 hervorgerufene Spannkraft des Absperrkörpers 1 kompensieren kann. Durch Ausdehnung des Halteelementes 3 infolge einer unzulässig hohen Temperatur wird das Federelement 4 bis zu einem Punkt weitergespannt, an dem die Festigkeit des Halteelementes 3 die Federkraft nicht mehr kompensieren kann, was ein Abscheren des Halteelementes 3 und damit ein schlagartiges Freigeben des Absperrkörpers 1 zur Folge hat.

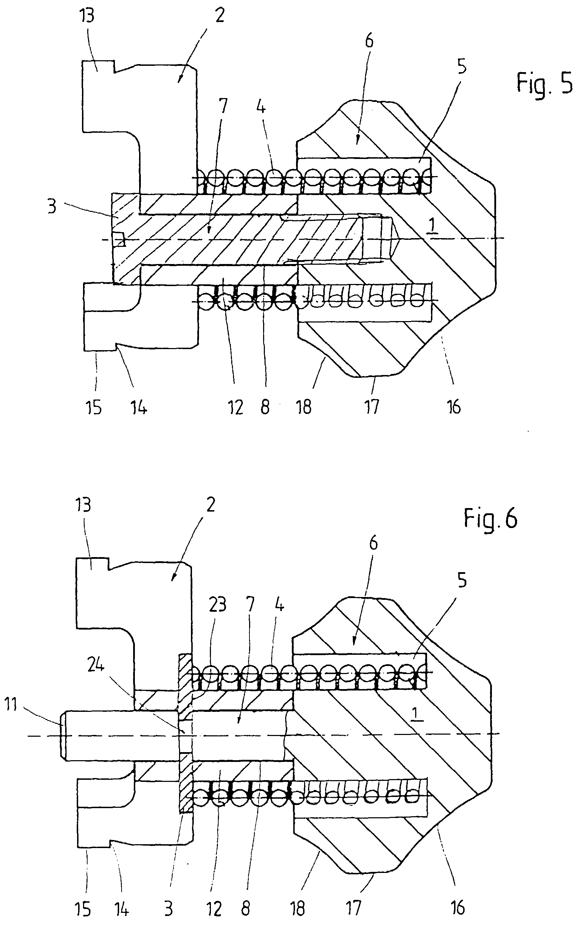

Die in den Fig. 4 und 5 gezeigten Ausführungsformen des Halteelementes 3 sind über ein Schraubengewinde an dem Absperrkörper 1 befestigt. Dabei ist das in Fig. 4 dargestellte Halteelement 3 als Gewindebuchse und das in Fig. 5 gezeigte als Gewindebolzen ausgeführt. Die Funktionsweise des als Gewindebuchse ausgeführten Halteelementes 3 ist analog den zuvor beschriebenen Ausführungsformen gemäß Fig. 1 bis 3. Das Halteelemente 3 ist aus einem temperaturabhängigen Dehnmaterial gefertigt, das sich bei einer vorbestimmten Temperatur so weit dehnt, daß die in den Gewindegängen erzeugte Reibkraft die Federkraft nicht mehr kompensieren kann und der Absperrkörper 1 freigegeben wird. Bei der in Fig. 5 gezeigten Ausführungsform als Gewindebolzen besteht das Halteelement 3 aus einem Material, das bei der vorbestimmten Temperatur erweicht wird und aufgrund der dadurch bedingten reduzierten Bindekraft die Schließbewegung des Absperrkörpers 1 ermöglicht.

Bei der in Fig. 6 dargestellten Ausführungsform ist das Halteelement 3 in Art einer Klammer ausgebildet, die durch eine seitliche Öffnung 23 an dem zentralen Bereich 12 des Stützelementes 2 in eine umlaufende Nut 24 am Führungsabschnitt 6 des Absperrkörpers 1 eingreift, so daß eine axiale Relativbewegung des Absperrkörpers 1 in bezug auf das Stützelement 2 verhindert wird. Das Halteelement 3 ist wiederum aus einem temperaturabhängigen Dehnmaterial gefertigt, dessen Verformungswiderstand sich bei der vorbestimmten Temperatur so weit reduziert, daß das Halteelement 3 aus der Nut 24 aufgrund der herrschenden Federkraft herausgedrückt wird.

Einbaumöglichkeiten für das erfindungsgemäße Sicherheitsventil finden sich in allen gängigen Armaturen, wie beispielsweise Gassteckdose, Kugeleckhahn, Durchgangshahn etc. Durch die einfache Montage von Absperrkörper 1 und Stützelement 2 ist es mit geringem Aufwand möglich, diese als vormontierte Einheit in einer mit ausgebildetem Ventilsitz versehenen Rohrleitung zu integrieren, ohne daß zwingenderweise von den Normmaßen der Armatur abgewichen werden muß.

Durch das erfindungsgemäße Sicherheitsventil ist eine im Vergleich zum Stand der Technik erheblich vereinfachte Montage möglich, da das Halteelement 3 lediglich mit einem Bauteil, vorzugsweise mit dem Absperrkörper 1, verbunden werden muß und aufgrund seines unterhalb durch die Werkstoffwahl vorbestimmbaren Temperatur vorhandenen Verformungswiderstandes auf kraft-, form- oder stoffschlüssige Art den Absperrkörper 1 und das in der Rohrleitung festlegbare Stützelement 2 miteinander verbindet. Mit den in den Figuren gezeigten Ausführungsbeispielen des Halteelementes 3 ist zudem eine sichere, schnelle und im Vergleich zu herkömmlichen Lotlegierungen präzisere Auslösung des Schließvorganges gewährleistet, da dies unabhängig von der die Schließzeit erheblich beeinflussenden Aufschmelzdauer einer verwendeten Lotmenge erfolgt. Darüber hinaus ist durch das erfindungsgemäße Sicherheitsventil eine hohe Lebensdauer sichergestellt, da es bei mehrmaligem Erreichen des Grenzbereiches der Auslösetemperatur nicht zu irreversiblen Prozessen, wie beispielsweise das teilweise Aufschmelzen einer Lotlegierung, kommen kann, sondern statt dessen eine bereits eingesetzte Dehnung bei sich wieder abkühlenden Temperaturen nahezu reversibel ist.

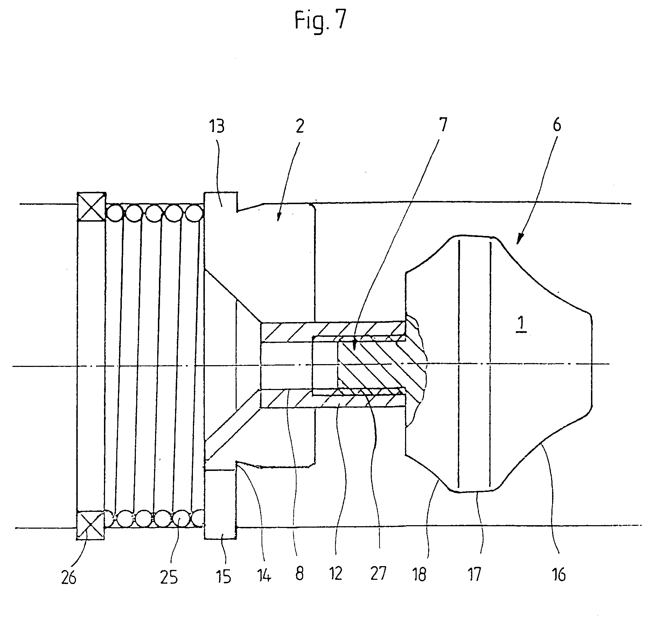

Fig. 7 zeigt eine alternative Ausführungsform des Sicherheitsventils, bei dem der Absperrkörper 1 über ein Gewinde 27 direkt an dem zentralen Bereich 12 des Stützelementes 2 angeschraubt ist. Das Stützelement 2 weist wiederum Haltebeine 13 auf, die mit Vorsprüngen 15 versehen sind, welche in eine umlaufende Nut an der Innenwandung der Rohrleitung verstemmt sind. In einer weiteren Nut an der Innenwandung der Rohrleitung ist eine ringförmige Sicherungsscheibe 26 angeordnet, die einen Absatz bildet, auf die sich ein Federelement 25 abstützt. Das als Druckfeder ausgebildete Federelement 25 ist im gespannten Zustand zwischen Sicherungsscheibe 26 und der dem Absperrkörper 1 abgewandten Seite des Stützelementes 2 eingespannt.

Die Haltebeine 13 des Stützelementes 2 sind aus einem temperatursensitiven Material gefertigt, das bei einer Temperatur unterhalb der vorbestimmbaren Temperatur einen Verformungswiderstand aufweist, welcher das Stützelement 2 in der Rohrleitung verstemmt. Wird die vorbestimmt Tempertur erreicht, löst sich das Stützelement 2 aus der Nut der Innenwandung der Rohrleitung und schießt aufgrund der Federwirkung zusammen mit dem Absperrkörper 1 in Richtung des Ventilsitzes, so daß dieser verschlossen wird. Das Lösen des Stützelementes 2 aus der Nut der Innenwandung der Rohrleitung ist darauf zurückzuführen, daß die Scherfestigkeit des Stützelementes 2 bei der vorbestimmbaren Temperatur geringer ist als die durch das Federelement 25 aufgeprägte Kraft, so daß es zu einem Abscheren der Vorsprünge 15 des Stützelementes 2 kommt. Alternativ können die Haltebeine 13 des Stützelementes 2 auch aus einem Werkstoff gefertigt sein, der sich mit zunehmender Temperatur zusammenzieht, wie beispielsweise Wismut. Bei einer unzulässig hohen Temperatur sind die Haltebeine 13 des Stützelementes 2 dann so weit kontrahiert, daß die durch das Federelement 25 hervorgerufene Kraft nicht mehr kompensiert werden kann und der Absperrkörper 1 mit dem Stützelement 2 freigegeben wird.

Der besondere Vorteil dieser alternativen Ausführungsform des Sicherheitsventils besteht darin, daß die Temperatureinwirkung auf das temperatursensitive Stützelement nicht nur durch die Temperatur des aufgeheizten Mediums erfolgt, sondern auch durch die in der Regel eine besonders gute Wärmleitfähigkeit aufweisende Innenwandung der Rohrleitung, so daß ein sehr exaktes Auslösen des Sicherheitsventils erzielt werden kann.

### Bezugszeichenliste

- 1: Absperrkörper
- 2: Stützelement
- 3: Halteelement
- 4: Federelement
- 5: ringförmige Vertiefung
- 6: Kopfabschnitt
- 7: Führungsabschnitt
- 8: Bohrung
- 9: Nut
- 10: Absatz
- 11: zapfenförmiges Ende
- 12: zentraler Bereich
- 13: Haltebein
- 14: Einkerbung
- 15: Vorsprung
- 16: hyperboloidförmiger Bereich
- 17: kegelsegmentförmiger Bereich
- 18: hyperboloidförmiger Bereich
- 19: Fase
- 20: Fase
- 21: Stützhülse
- 22: Durchgangsbohrung
- 23: Öffnung
- 24: Nut
- 25: Federelement
- 26: ringförmige Sicherungsscheibe
- 27: Gewinde

## Patentansprüche

1. Thermisch betätigbares Sicherheitsventil zum Absperren von Rohrleitungen fluider Medien, beispielsweise brennbarer Gase, mit einem Absperrkörper (1), mittels dem ein in der Rohrleitung ausgebildeter Ventilsitz verschließbar ist, einem in der Rohrleitung festlegbaren Stützelement (2) sowie einer den Absperrkörper (1) bei einer vorbestimmbaren Temperatur selbsttätig freigebenden Sperre, durch die in der Offenstellung des Sicherheitsventils der Absperrkörper (1) in einem bezüglich seiner Schließbewegung gespannten Zustand an dem Stützelement (2) gehalten ist,
**dadurch gekennzeichnet,**
daß die Sperre zumindest ein temperatursensitives Halteement (3) umfaßt, das aufgrund seines unterhalb der vorbestimmbaren Temperatur vorhandenen Verformungswiderstandes den Absperrkörper (1) und das Stützelement (2) lösbar miteinander verbindet und an einem dieser beiden befestigbar ist.

2. Sicherheitsventil nach Anspruch 1, dadurch gekennzeichnet, daß das Halteelement (3) in Art eines Clips ausgebildet ist.

3. Sicherheitsventil nach Anspruch 2, dadurch gekennzeichnet, daß das Halteelement (3) mit wenigstens einem Vorsprung versehen ist, der in eine korrespondierend ausgebildete Aussparung an dem Absperrkörper (1) oder an dem Stützelement (2) eingreift.

4. Sicherheitsventil nach Anspruch 3, dadurch gekennzeichnet, daß das Halteelement (3) im wesentlichen hohlzylindrisch ausgebildet ist und wenigstens an einem Ende mit einem den Vorsprung bildenden Absatz (10) versehen ist.

5. Sicherheitsventil nach einem der Ansprüche 1 bis 4, dadurch gekennzeichnet, daß der Absperrkörper (1) einen Kopf- (6) und einen Führungsabschnitt (7) umfaßt, wobei der Führungsabschnitt (7) eine Bohrung (8) des Stützelementes (2) durchragend angeordnet ist.

6. Sicherheitsventil nach Anspruch 5, dadurch gekennzeichnet, daß zumindest der Bereich des Führungsabschnitts (7), der das Stützelement (2) durchragt, annähernd zapfenartig ausgebildet ist und eine umlaufende Nut (9) für den Vorsprung des Halteelementes (3) aufweist.

7. Sicherheitsventil nach Anspruch 6, dadurch gekennzeichnet, daß die an dem Stützelement (2) anliegende Stirnseite des Halteelementes (3) mit einer Fase (19) versehen ist, die gegen eine korrespondierende Fase (20) der Bohrung (8) des Stützelementes (2) anpreßbar ist.

8. Sicherheitsventil nach einem der Ansprüche 6 oder 7, dadurch gekennzeichnet, daß das Halteelement (3) von einer Stützhülse (21) umschlossen ist.

9. Sicherheitsventil nach Anspruch 1, dadurch gekennzeichnet, daß das Halteelement (3) über ein Schraubengewinde an dem Absperrkörper (1) befestigbar ist.

10. Sicherheitsventil nach Anspruch 1, dadurch gekennzeichnet, daß das Halteelement (3) im wesentlichen stiftförmig ausgebildet ist.

11. Sicherheitsventil nach einem der Ansprüche 1 bis 10, dadurch gekennzeichnet, daß das Halteelement (3) aus einem temperaturabhängigen Dehnmaterial gefertigt ist.

12. Sicherheitsventil nach Anspruch 11, dadurch gekennzeichnet, daß die vorbestimmbare Temperatur durch unterschiedliche Werkstoffwahl für das Halteelement (3) variierbar ist.

13. Sicherheitsventil nach einem der Ansprüche 1 bis 12, dadurch gekennzeichnet, daß der Absperrkörper (1) in Richtung der Rohrleitung geführt ist.

14. Sicherheitsventil nach Anspruch 5, dadurch gekennzeichnet, daß der aus Kopf- (6) und Führungsabschnitt (7) bestehende Absperrkörper (1) einstückig ausgebildet ist.

15. Sicherheitsventil nach einem der vorhergehenden Ansprüche, dadurch gekennzeichnet, daß der Kopfabschnitt (6) eine ringförmige Vertiefung (5) zur Aufnahme eines Federelementes (4) aufweist.

16. Sicherheitsventil nach einem der vorhergehenden Ansprüche, dadurch gekennzeichnet, daß das Stützelement (2) Haltebeine (13) umfaßt, die in einer Nut an der Innenwandung der Rohrleitung verstemmbar sind.

17. Thermisch bestätigbares Sicherheitsventil zum Absperren von Rohrleitungen fluider Medien, beispielsweise brennbarer Gase, mit einem Absperrkörper (1), mittels dem ein in der Rohrleitung ausgebildeter Ventilsitz verschließbar ist, und einem in der Rohrleitung festlegbaren Stützelement (2), wobei der Absperrkörper (1) bis zu einer vorbestimmbaren Temperatur in der Offenstellung des Sicherheitsventils über das Stützelement (2) in einem bezüglich seiner Schließbewegung gespannten Zustand gehalten ist, dadurch gekennzeichnet, daß das Stützelement (2) wenigstens teilweise aus einem temperatursensitiven Material gefertigt ist, aufgrund dessen unterhalb der vorbestimmbaren Temperatur vorhandenen Verformungswiderstands das Stützelement (2) in der Rohrleitung festlegbar ist.

18. Sicherheitsventil nach Anspruch 17, dadurch gekennzeichnet, daß das Stützelement (2) in einer Nut an der Innenwandung der Rohrleitung verstemmbar ist.

19. Sicherheitsventil nach einem der Ansprüche 17 bis 18, dadurch gekennzeichnet, daß das Stützelement (2) mittels eines Federelementes (25) in Richtung der Schließbewegung des Absperrkörpers (1) belastet ist.

20. Sicherheitsventil nach Anspruch 19, dadurch gekennzeichnet, daß sich das Federelement (25) gegen einen in der Rohrleitung angeordneten Absatz abstützt .

21. Sicherheitsventil nach Anspruch 10, dadurch gekennzeichnet, daß der Absatz eine in einer Nut an der Innenausnehmung der Rohrleitung gehaltene ringförmige Scheibe ist.
